# EUROPEAN PATENT APPLICATION

(11) **EP 4 834 696 A1**
(43) Date of publication of application: **04.11.2026**
(21) Application number: 25174015.5
(22) Date of filing: 02.05.2025
(51) Int. Cl.: B61D 17/20, B60D 5/00

(54) **INTERIOR SIDE PANEL ARRANGEMENT FOR A GANGWAY, GANGWAY, AND MULTI-CAR VEHICLE WITH GANGWAY**

(71) Applicant: Dellner Couplers AB, 791 95 Falun (SE)
(72) Inventor: Fowler, Jason, Derby Derbyshire DE22 2 JN (GB); Velusamy, Senthilvel, Tamil Nadu 600126 (IN); Rajendran, Sureshkumar, Tamil Nadu 600056 (IN)
(74) Representative: Klunker IP Patentanwälte PartG mbB

(57) **Abstract**

An interior side panel arrangement for a gangway between two passenger cars of a multi-car vehicle comprises five overlapping panels, namely two fixedly mounted end panels 1A, 1B, one middle panel 3 and two intermediate panels 2A, 2B. The middle panel 3 and intermediate panels 2A, 2B are attached to two five-pivot-point scissor mechanisms 10 and two three-pivot-point scissor mechanisms 20 arranged above and below thereof. Only the five-pivot-point scissor mechanisms 10 are fixedly attached to an end frame at their outermost pivot points 10A, 10E. The end panels 1A, 1B are slidably sandwiched between the intermediate panels 2A, 2B and the end panel sliding supports 15A, 15B, 25A, 25B which are attached to the intermediate panels 2A, 2B.

## Description

### FIELD OF THE INVENTION

The present invention relates to an interior side panel arrangement for a gangway which is to be arranged between a first passenger car and a second passenger car of a multi-car vehicle so as to connect the two passenger vehicles for passengers to walk through the gangway from one vehicle to another vehicle.

### BACKGROUND OF THE INVENTION

Multi-car vehicles include rail vehicles, such as trains and trams, as well as road vehicles, such as buses. Adjacent cars of a multi-car passenger vehicle are often connected by a gangway so that the passengers can walk through the gangway between the cars. The gangway is typically surrounded by a bellows which protects the interior of the gangway from the environment while at the same time accommodating for relative movements between the cars. The interior of the gangway comprises a floor for the passengers to walk on as well as side walls which protect the passengers from the surrounding bellows and which define an interior width of the gangway for the passengers. Similar to the surrounding bellows, the floor and the side walls are configured to accommodate for relative movements between the cars. For example, the side walls are configured such that one side wall extends while the respective opposite side wall contracts when the multi-car vehicle drives along a curve. Also tilting and rolling between adjacent cars is typically accommodated by the side walls of the gangway.

There are different types of interior side walls for gangways. WO 96/10510 A1 discloses a multi-panel side wall which may comprise two or three panels. CN 201205911 discloses a three-panel side wall. The three-panel side walls have two end panels respectively attached to the adjacent cars and one middle panel arranged between the two end panels so as to cover a distance between the two end panels. The middle panel is held in place by means of a scissor mechanism having three pivot points. By way of background explanation, a three-pivot-point scissor mechanism comprises two large rods and four short rods having half the length of the large rods. The rods are linked together so as to form two rhombs. More specifically, the two large rods are linked together at their centers, which link forms a first, central pivot point of the scissor mechanism, whereas the respective two of the short rods are linked together with one of their ends and linked to the respective ends of the two large rods with their free ends. This way, the scissor mechanism has one rhomb formed on each side of the central pivot point. The points where the two short rods are linked together form a second and a third pivot point of the three-pivot-point scissor mechanism.

The three-pivot-point scissor mechanism is provided on a rear side of the side wall, i.e. on the side facing away from the interior of the gangway. While the middle panel is attached to the scissor mechanism at the scissor mechanism's central pivot point, the scissor mechanism itself is attached to the adjacent cars at the respective other two of the three pivot points. This way, the middle panel is held in a fixed position between the adjacent cars at all times, independent of how close or spaced apart the cars become during traveling along a curvy track or road.

One problem arising with the three-panel side walls consists of gaps forming between the panels. Ideally, the surfaces of the panels slide along each other during their relative movement so that any clothing or body parts, such as fingers, of the passengers cannot get caught between them. However, due to the stiffness of the panels, the danger of gaps forming between the panels increases as the extension of the side wall increases when the multi-car vehicle travels along curves. The gaps may become particularly large in tight curves, i.e. in situations where the side panel arrangement needs to expand maximally.

This problem is partly compensated in CN 201205911 Y, which discloses a side wall having five panels, i.e. a middle panel, two end panels and two intermediate panels which respectively cover a distance between, and overlap with both, the middle panel and a respective one of the end panels. While a three-panel side wall may create two gaps, one between the middle panel and the first end panel and another one between the middle panel and second end panel, a five-panel wall may create four gaps. However, the four gaps are theoretically only half as large as the two gaps of the three-panel wall, so that the danger of gaps forming is accordingly reduced.

In the five-panel side wall of CN 201205911 Y, two three-pivot-point scissor mechanisms are provided, vertically spaced apart from the other, on the rear side of the wall. The three-pivot-point scissor mechanism is attached to the first and second passenger cars at their two outermost pivot points so that when the two passenger cars move away from or closer to each other, the three-pivot-point scissor mechanism expands or contracts, respectively. Further, the middle panel is attached to the three-pivot-point scissor mechanism at its central pivot point so that the middle panel moves relative to the first and second end panels when the three-pivot-point scissor mechanism expands or contracts. In addition, the first and second intermediate panels are hingedly connected to the three-pivot-point scissor mechanism so that the first and second intermediate panels move relative to the middle panel and relative to the first and second end panels when the three-pivot-point scissor mechanism expands or contracts. More specifically, two additional short rods are attached to the scissor mechanism in parallel to the other rods so as to respectively bridge the two rhombs, and the first and second intermediate panels are hingedly attached centrally to these additional short rods. This way, when the three-pivot-point scissor mechanism expands or contracts, the middle panel moves twice as fast relative to the two end panels, as compared to the movement of the two intermediate panels.

### SUMMARY OF THE INVENTION

It is a primary object of the present invention to further reduce the danger of gaps forming between overlapping panels of a multi-panel interior side panel arrangement having at least five panels, preferably a five-piece system having exactly five panels.

According to a first aspect of the present disclosure, there is provided an interior side panel arrangement for a gangway between a first passenger car and a second passenger car of a multi-car vehicle. The side panel arrangement comprises a first end panel configured to be arranged next to the first passenger car and a second end panel configured to be arranged next to the second passenger car, a middle panel arranged between the first and second end panels, and a first intermediate panel arranged between and overlapping with one or both of the first end panel and the middle panel as well as a second intermediate panel arranged between and overlapping with one or both of the second end panel and the middle panel. In the case that the interior side panel arrangement is a five-piece system, i.e. an arrangement having exactly five panels, the first intermediate panel overlaps with both the first end panel and middle panel and the second intermediate panel overlaps with both the second end panel and middle panel. However, when the multi-panel has more than five panels, such as seven or nine panels, there are further intermediate panels in addition to the first and second intermediate panels. In such a case, the first and second intermediate panels - in the sense of the present disclosure - are the ones next to the middle panel and, therefore, overlap with the middle panel and an adjacent intermediate panel, not with an end panel.

Furthermore, a plurality of pivot point scissor mechanisms, preferably three or more than three pivot point scissor mechanisms, more preferably four pivot point scissor mechanisms, are provided at a rear side of the side panel arrangement. This includes two different types of pivot point scissor mechanisms, namely (a) at least one, preferably two, first pivot point scissor mechanisms which may take the form of a multi-pivot-point scissor mechanism having at least three, preferably exactly five, pivot points and (b) at least one, preferably two, second pivot point scissor mechanisms which may take the form of a three-pivot-point scissor mechanism having exactly three pivot points. The pivot point scissor mechanisms are arranged above each other in a vertically spaced relationship.

Therein, the first or multi-pivot-point scissor mechanism is configured to be attached to the first passenger car or first end panel as well as to the second passenger car or second end panel. This way, when the two passenger cars or the two end panels move away from or closer to each other, the first pivot point scissor mechanism expands or contracts, respectively. Furthermore, the middle panel, first intermediate panel and second intermediate panel are attached to the first pivot point scissor mechanism so that they move relative to each other and relative to the first and second end panels when the first pivot point scissor mechanism expands or contracts.

The arrangement is preferably such that the first or multi-pivot-point scissor mechanism, having the at least three and preferably five pivot points, is configured to be attached to the first passenger car or first end panel at a first one of its at least three pivot points and to the second passenger car or second end panel at a second one of its at least three pivot points, whereas the middle panel is attached to the first or multi-pivot-point scissor mechanism at a central one of the at least three pivot points.

If the first or multi-pivot-point scissor mechanism is a three-pivot-point scissor mechanism, i.e. having exactly three pivot points, additional short rods may be arranged in parallel to the other rods and bridging the rhombs, as in CN 201205911 Y, wherein the first and second intermediate panels are attached to these additional short rods. However, according to a preferred embodiment of the present disclosure, the first or multi-pivot-point scissor mechanism is a five-pivot-point scissor mechanism, i.e. having exactly five pivot points. In this case, the first and second intermediate panels may be attached to the scissor mechanism at the respective ones of the five pivot points. One advantage of a five-pivot-point scissor mechanism as compared to a three-pivot-point scissor arrangement, which provides the same maximum extension as the five-pivot-point scissor mechanism, is that the five-pivot-point scissor mechanism has shorter rods and, therefore, requires less lateral space in its contracted position than the three-pivot-point scissor mechanism. The free space is needed for the arrangement of the second type of pivot point scissor mechanisms to be arranged vertically above and/or below the first pivot point scissor mechanism.

While the first or multi-pivot-point scissor mechanism is configured to be attached to the first passenger car or first end panel as well as to the second passenger car or second end panel, the second or three-pivot-point scissor mechanism is not connected to the passenger cars or end panels. Rather, the second or three-pivot-point scissor mechanism connects only to the middle panel and the first and second intermediate panels, preferably at the respective ones of its three pivot points, so that the second or three-pivot-point scissor mechanism expands or contracts, respectively, as the middle panel and the first and second intermediate panels move relative to each other when the first or multi-pivot-point scissor mechanism expands or contracts.

As a result, the panels are stabilized by the one or more, preferably two, second or three-pivot-point scissor mechanism which connects to the middle panel and the first and second intermediate panels. This way, the danger of gaps forming between these overlapping panels can effectively be prevented at the level where the second or three-pivot-point scissor mechanism is arranged, and the danger of gaps forming is accordingly reduced vertically above and below that level. Similar to the first or multi-pivot-point scissor mechanism, expansion and contraction of the second or three-pivot-point scissor arrangement are synchronized with the relative movement of the associated panels so that the stabilization is realized over the whole range of movement of these panels.

Preferably, two of the second or three-pivot-point scissor mechanisms are arranged vertically above and below, respectively, the at least one first pivot point scissor mechanism. This may be sufficient for stabilization purposes. In particular, these scissor mechanisms are preferably arranged as close to the top and bottom of the side panel arrangement as possible.

Further preferably, there are provided at least two, more preferably exactly two, of the first or multi-pivot-point scissor mechanisms. This way, the movement of the panels relative to the adjacent passenger cars is exactly controlled. Namely, since the first or multi-pivot-point scissor mechanisms are connected to the cars (or to the end panels attached to the cars), they move in parallel whenever the cars move relative to each other and, therefore, the panels, which are attached to all (or to at least two) of the first or multi-pivot-point scissor mechanisms, have to exactly follow such movement.

In a particularly preferred embodiment of the present disclosure, the second or three-pivot-point scissor mechanism has shorter scissor arms than the first or multi-pivot-point scissor mechanism. As a result, the second or three-pivot-point scissor mechanism requires relatively little lateral space in its contracted position. As such, it can be placed closer to the top or bottom of the side panel arrangement and, thus, better stabilize the side panel arrangement near its upper and lower ends.

However, since the second or three-pivot-point scissor mechanism is linked to and follows the movement of the first or three-pivot-point scissor mechanism by way of the panels to which they are both attached, measures need to be taken to allow such movements despite the different scissor arm lengths. Therefore, according to a specific embodiment of the present disclosure, in order for the arrangement to work properly, either the first or multi-pivot-point scissor mechanism or the second or three-pivot-point scissor mechanism may be slidably connected to the first and second intermediate panels. The slidable connection may be such that:
- further expansion of the first or multi-pivot-point scissor mechanism is possible when the second or three-pivot-point scissor mechanism has reached its maximum expansion, or
- further contraction of the first or multi-pivot-point scissor mechanism is possible when the second or three-pivot-point scissor mechanism has reached its maximum contraction, or
- both: further expansion of the first or multi-pivot-point scissor mechanism is possible when the second or three-pivot-point scissor mechanism has reached its maximum expansion and further contraction of the first or multi-pivot-point scissor mechanism when the second or three-pivot-point scissor mechanism has reached its maximum contraction.

In order to avoid a non-defined state of the first and second intermediate panels relative to the other panels, the slidable connection may include biasing elements, such as springs, in particular compression springs and/or tension springs, which urge the first intermediate panel toward or away from, or partially toward and partially away from, the first end panel and which urge the second intermediate panel toward or away from, or partially toward and partially away from, the second end panel. This will be explained in more detail below with reference to the accompanying drawings.

As mentioned above, the first or three-pivot-point scissor mechanism connects only the middle panel and the first and second intermediate panels to one another and, thus, stabilizes only these panels against the problem of gaps forming, whereas minor gaps between the intermediate panels and the respectively adjacent end panels may still occur at the level of the first or three-pivot-point scissor mechanism. In order to further reduce also these gaps, at least one end panel sliding support may be attached to one or both of the first and second intermediate panels, so that the adjacent end panel is slidably sandwiched between the intermediate panel and the end panel sliding support. For instance, the end panel sliding support may be attached on a rear side of the intermediate panel and extend in parallel thereto in a direction toward the end panel with which it overlaps, and the end panel may move within the slit defined between the intermediate panel and the end panel sliding support.

Alternatively, the end panel sliding support is not attached to the intermediate panel, but may be attached to the end panel instead, so that the adjacent intermediate panel is slidably sandwiched between the end panel and the end panel sliding support. For instance, the end panel sliding support may be attached on a rear side of the end panel and extend in parallel thereto in a direction toward the intermediate panel with which it overlaps, and the intermediate panel may move within the slit defined between the end panel and the end panel sliding support.

Preferably, the connection of the second or three-pivot-point scissor mechanism to the first and second intermediate panels may be provided in an area of the end panel sliding supports. For instance, the second or three-pivot-point scissor mechanism may be mounted directly on the end panel sliding support, which is itself attached to the first or second intermediate panel. Alternatively, the second or three-pivot-point scissor mechanism may extend through the end panel sliding support and connect directly to the first or second intermediate panel.

Similarly, the connection of the first or multi-pivot-point scissor mechanism to the first and second intermediate panels is preferably provided in an area of the end panel sliding supports. Again, the first or multi-pivot-point scissor mechanism may be mounted directly on the end panel sliding support, which is itself attached to the first or second intermediate panel. Alternatively, the first or multi-pivot-point scissor mechanism may extend through the end panel sliding support and connect directly to the first or second intermediate panel.

However, as stated above, either the first or multi-pivot-point scissor mechanism or the second or three-pivot-point scissor mechanism may be slidably connected to the first and second intermediate panels in order to accommodate for different scissor arm lengths of the two types of scissor mechanisms. In this situation, i.e. where a pivot point scissor mechanism is slidably connected to one or both of the first and second intermediate panels, it is preferred to mount the scissor mechanism on the end panel sliding support, which is itself attached to the first or second intermediate panel. This way, the sliding connection can be integrated into the end panel sliding support.

As regards the manner of how the panels of the side panel arrangement are overlapping, there are generally two preferred ways. According to the first way, the panels overlap sequentially from one end to the other so that the panel located at one end of the panel arrangement forms the innermost panel, so as to face toward an interior of the gangway, and the panel at the opposite end forms the outermost panel, so as to face away from an interior of the gangway. However, this arrangement is not symmetrical in relation to the length of the gangway and may cause unpredictable stresses in the side panel arrangement during use. Therefore, according to the preferred second way, the middle panel forms the outermost or, more preferably, the innermost panel of the side panel arrangement and the first and second end panels form outermost panels of the side panel arrangement, whereas the first intermediate panel is sandwiched between the middle panel and the first end panel and the second intermediate panel is sandwiched between the middle panel and the second end panel.

The present disclosure is further directed to a corresponding gangway which is configured to be mounted between a first passenger car and a second passenger car of a multi-car vehicle, wherein the gangway comprises, on each lateral side of the gangway, an interior side panel arrangement as described herein.

The present disclosure is also directed to a corresponding multi-car vehicle which comprises a first passenger car, a second passenger car and a gangway mounted between the first and second passenger cars.

### BRIEF DESCRIPTION OF THE DRAWINGS

The foregoing summary as well as the following detailed description of preferred embodiments will be better understood when read in conjunction with the appended drawings. For the purpose of illustrating the present disclosure, reference is made to the drawings. The scope of the disclosure, however, is not limited to the specific embodiments disclosed in the drawings. In the drawings:
- Fig. 1: is a perspective view of a gangway for a multi-car vehicle,
- Fig. 2: is a perspective front view of an interior side panel arrangement of the gangway in Fig. 1,
- Fig. 3: is a perspective rear view of the interior side panel arrangement of Fig. 2,
- Fig. 4: is a rear plan view of the interior side panel arrangement of Figs. 2 and 3,
- Fig. 5: is a cross-sectional view along A-A of the interior side panel arrangement of Fig. 4,
- Fig. 6: is a cross-sectional view of a three-pivot-point scissor mechanism,
- Fig. 7: is a cross-sectional view along B-B of the interior side panel arrangement as shown in Fig. 4,
- Fig. 8: is a cross-sectional view of a five-pivot-point scissor mechanism,
- Fig. 9: is a plan view of the five-pivot-point scissor mechanism shown in Fig. 8 and
- Figs. 10A to 10C: are perspective partial views of the interior side panel arrangement in the areas of the three-pivot-point and five-pivot-point scissor mechanisms showing different extensions of the side panel arrangement.

### DETAILED DESCRIPTION

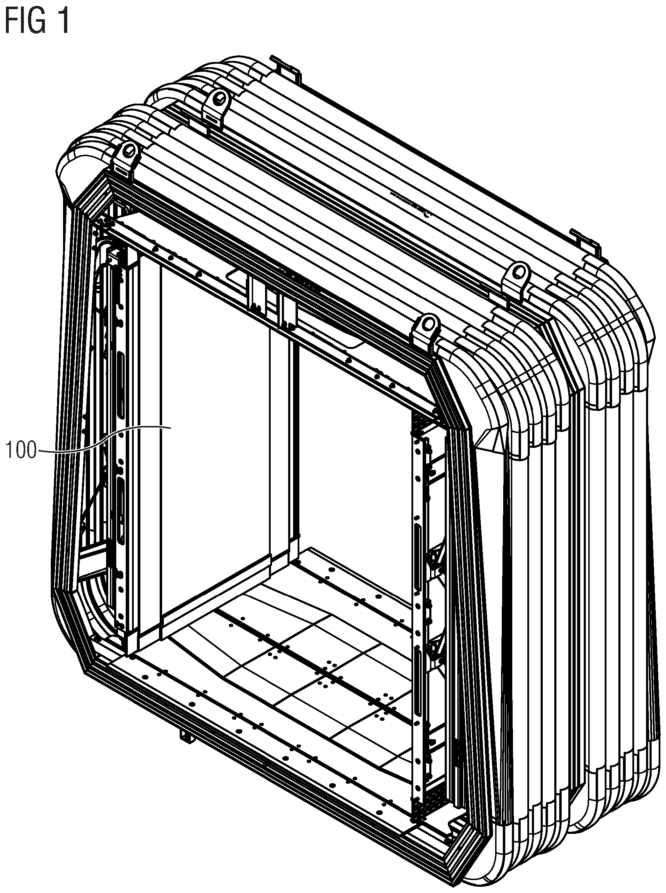

Fig. 1 shows a gangway through which passengers can walk between adjacent cars of a multi-car vehicle, such as trains, trams or buses. The gangway is surrounded by a bellows which protects the interior of the gangway from the environment while at the same time accommodating for relative movements between the cars. The interior of the gangway comprises a floor for the passengers to walk on as well as side walls in the form of an interior side panel arrangement 100 on both interior sides of the gangway.

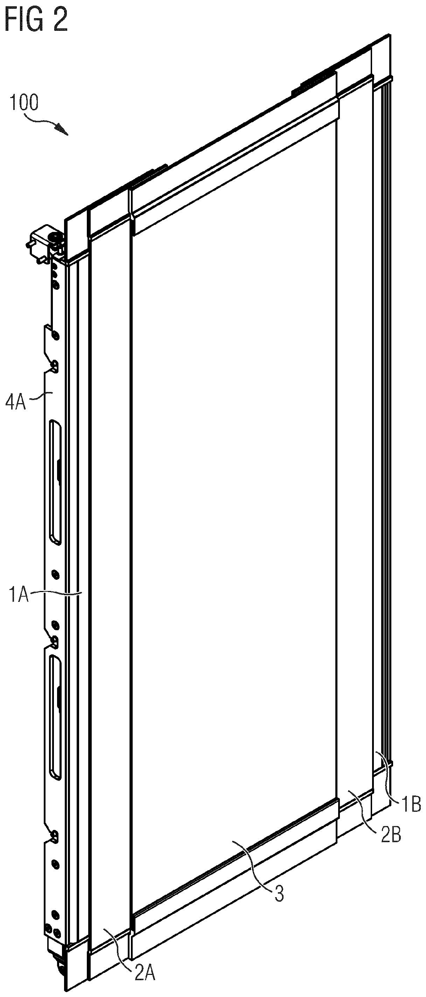

Fig. 2 shows a perspective front view of the interior side panel arrangement 100. In the embodiment shown, the interior side panel arrangement 100 is a five-piece system, i.e. it includes five panels partially overlapping each other. It may include more than five panels, such as six, seven, eight, nine or even more panels, wherein an odd number of side panels is preferred for symmetry reasons. Accordingly, in the embodiment shown, the interior side panel arrangement 100 comprises two end panels 1A and 1B, a middle panel 3 and two intermediate panels 2A and 2B which partly overlap with the middle panel 3 as well as with a respective end panel 1A and 1B. The arrangement is such that the middle panel 3 forms the innermost panel, i.e. it is arranged next to the interior of the gangway, whereas the end panels 1A and 1B form outermost panels of the panel arrangement and, thus, are arranged on the exterior or rear side of the panel arrangement. The interior side panel arrangement 100 comprises frames 4A, 4B at its lateral sides. The panels are mounted to these frames, and the entire interior side panel arrangement 100 can be mounted to the gangway or directly to adjacent cars of a multi-car vehicle, which are connected by the gangway, by means of the frames 4A, 4B.

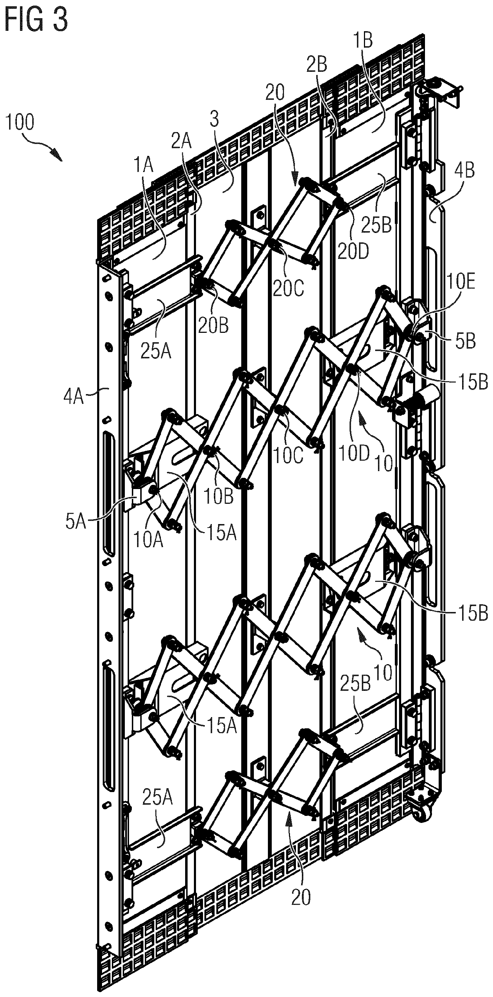

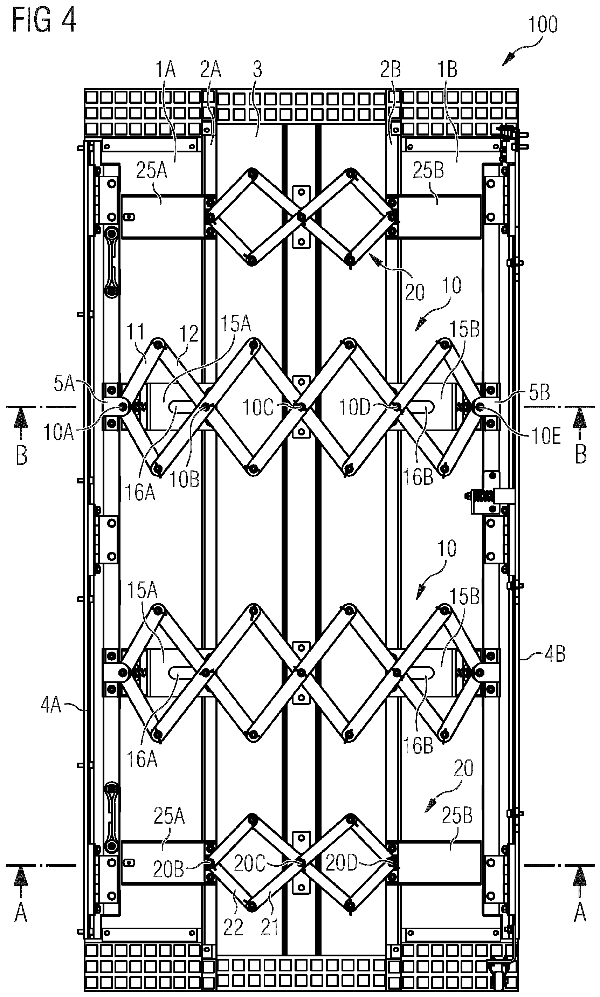

Fig. 3 is a perspective view of the rear side of the interior side panel arrangement 100, and Fig. 4 is a corresponding rear plan view. Pivot point scissor mechanisms 10 and 20 are arranged on the rear side and connect the panels in a way that the panels can move relative to each other when the panel arrangement 100 extends or contracts. Extension and contraction of the panel arrangement 100 occur in particular when the multi-car vehicle travels along a curve.

More specifically, there are provided two first pivot point scissor mechanisms 10 vertically in the center of the panel arrangement 100 and two second pivot point scissor mechanisms 20 vertically above and below, respectively, the first pivot point scissor mechanisms 10. The first pivot point scissor mechanisms 10 are multi-pivot-point scissor mechanisms which, in the embodiment shown, have exactly five pivot points 10A, 10B, 10C, 10D and 10E. The first pivot point scissor mechanisms 10 are fixedly attached to the mounting frames 4A and 4B by means of brackets 5A and 5B, namely at their outermost pivot points 10A and 10E, respectively. While the end panels 1A and 1B are likewise fixedly attached to the mounting frames 4A and 4B, respectively (or alternatively directly to the gangway or to adjacent cars of the multi-car vehicle), the middle panel 3 as well as the intermediate panels 2A and 2B are solely held by the five-pivot-point scissor mechanism 10. More specifically, the middle panel 3 and the intermediate panels 2A, 2B are attached to the five-pivot-point scissor mechanisms 10 at their respective pivot points 10B, 10C and 10D. This way, both the middle panel 3 and the first and second intermediate panels 2A, 2B move relative to each other and relative to the end panels 1A, 1B when the five-pivot-point scissor mechanism 10 extends or contracts.

As regards the second pivot point scissor mechanisms 20, they are each realized as a three-pivot-point scissor mechanism, i.e. having exactly three pivot points 20B, 20C and 20D. The second pivot point scissor mechanisms 20 are rearwardly attached to the middle panel 3 and to the intermediate panels 2A, 2B at the respective pivot points 20B, 20C, 20D. Since the movement of the middle panel 3 and the intermediate panel 2A, 2B depends on the extension or contraction of the five-pivot-point scissor mechanisms 10, and since the three-pivot-point scissor mechanisms 20 are attached to these panels, the three-pivot-point scissor mechanism 10 expands and contracts substantially in the same way as the five-pivot-point scissor mechanisms 10. The same effect is achieved even if the three-pivot-point scissor mechanism 20 is not attached to the middle panel 3. However, the purpose of the three-pivot-point scissor mechanisms 20 is to stabilize the side panel arrangement 100 and avoid gaps from forming between its panels, and the attachment of the three-pivot-point scissor mechanisms 20 to the middle panel 3 helps to avoid gaps from forming between the intermediate panels 2A, 2B and the overlapping middle panel 3.

In order to avoid gaps from forming between the intermediate panels 2A, 2B and the respectively adjacent end panels 1A, 1B, there are provided end panel sliding supports 15A, 15B and 25A, 25B which are attached to the rear side of the intermediate panels 2A and 2B, respectively, and extend - with a spacing between the intermediate panels 2A, 2B and the end panel sliding supports 15A, 15B and 25A, 25B - in a direction toward the respective first and second end panels 1A, 1B. This way, the end panels 1A and 1B are sandwiched in the spacing between the intermediate panels 2A, 2B and the end panel sliding supports 15A, 15B, 25A, 25B and can slide therebetween over the entire extension and contraction distance so that gaps cannot form between the intermediate panels 2A, 2B and end panels 1A, 1B.

The end panel sliding supports 25A and 25B are more important than the end panel sliding supports 15A, 15B because they are closer to the top and bottom of the interior side panel arrangement 100 where the risk of gaps forming is highest.

While the end panel sliding supports 15A, 15B, 25A, 25B can be mounted to the intermediate panels 2A, 2B at any vertical level, preferably including an arrangement close to the top end bottom of the interior side panel arrangement 100, it is preferred to combine them with the pivot point scissor mechanisms 10 and 20, respectively. That is, it is preferred to connect the three-pivot-point scissor mechanisms 20 to the first and second intermediate panels 2A, 2B in areas of the first and second end panel sliding supports 25A and 25B and to connect the five-pivot-point scissor mechanisms 10 to the first and second intermediate panels 2A, 2B in areas of the end panel sliding supports 15A and 15B. This facilitates the assembly work substantially because the pivot point scissor mechanisms 10 and 20 can be provided along with the associated end panel sliding supports 15A, 15B and 25A, 25B as pre-assembled components.

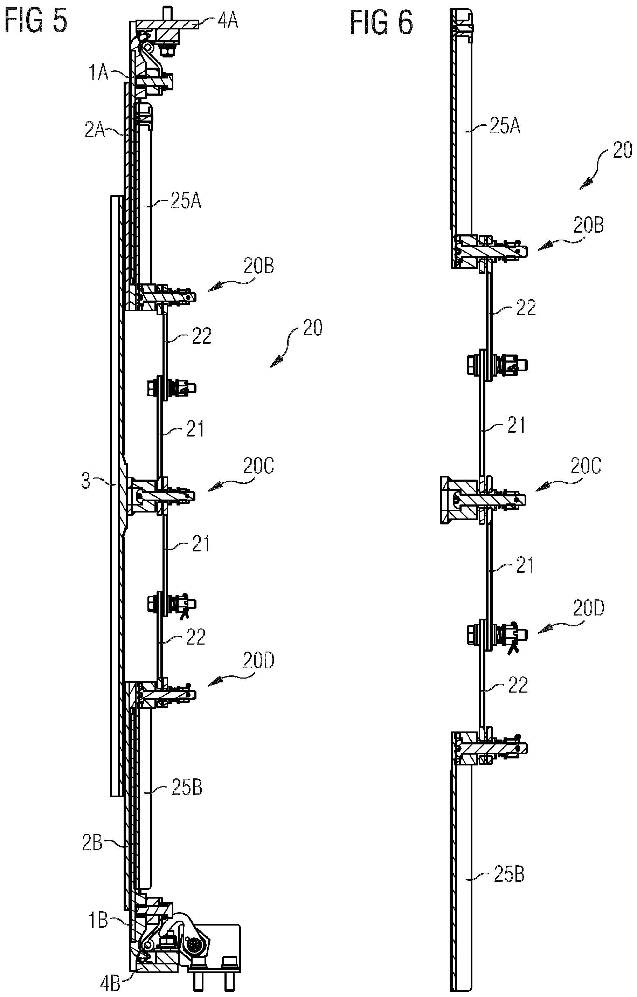

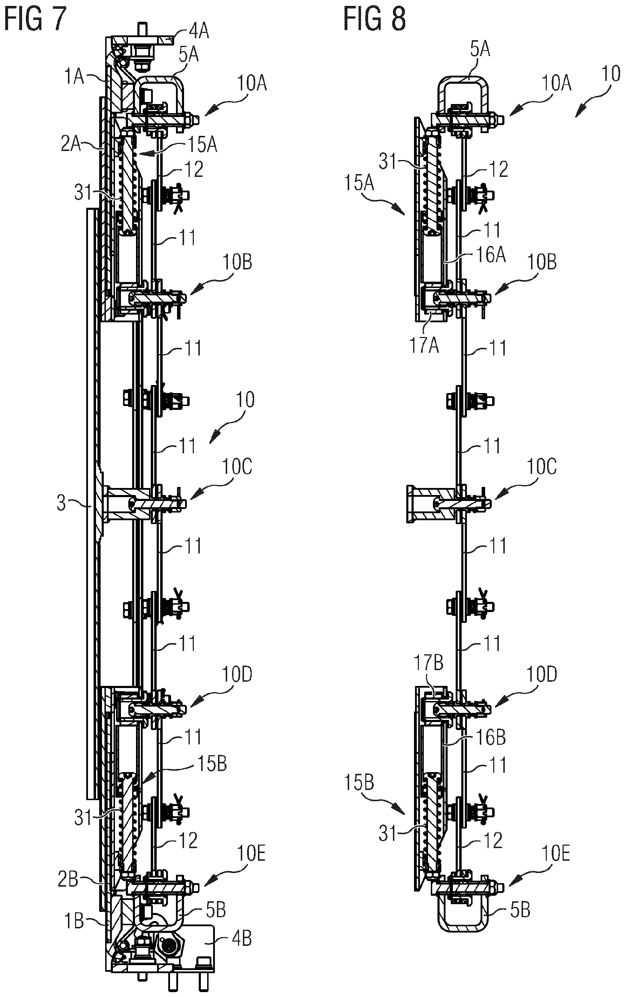

This is further illustrated in relation to Figs. 5 and 6 for a three-pivot-point scissor mechanism 20 and in relation to Figs. 7 to 10 for a five-pivot-point scissor mechanism 10. Fig. 5 shows a cross section through the interior side panel arrangement 100 along A-A as shown in Fig. 4, with the panels attached to the three-pivot-point scissor mechanism 20 (Fig. 5), whereas Fig. 6 shows the three-pivot-point scissor mechanism 20 without the panels (Fig. 6). It can be seen in Fig. 5 how the end panels 1A and 1B are sandwiched between the intermediate panels 2A and 2B and end panel sliding supports 25A, 25B, respectively. The end panels 1A, 1B are free to slide therebetween when the interior side panel arrangement 100 extends or contracts. Fig. 6 shows separately the combination of the three-pivot-point scissor mechanism 20 and end panel sliding supports 25A, 25B. The intermediate panel 2A, 2B and middle panel 3 are attached to the three-pivot-point scissor mechanism 20 by means of screws (the screws cannot be derived from the cross-sectional view shown in Fig. 5 but are illustrated in the plan rear view shown in Fig. 4).

Figs. 7 and 8 show a cross-sectional view of the five-pivot-point scissor mechanism 10 (along B-B in Fig. 4) with the panels attached thereto (Fig. 7) and without the panels (Fig. 8). As stated above, the five-pivot-point scissor mechanism 10 is attached to the mounting frames 4A and 4B by means of brackets 5A and 5B, respectively, namely at its outermost pivot points 10A and 10E. The middle panel 3 is attached to the five-pivot-point scissor mechanism 10 at its central pivot point 10C in the same way as it is attached to the three-pivot-point scissor mechanism 10 at the respective central pivot point 20C. And the intermediate panels 2A, 2B are attached to the five-pivot-point scissor mechanism 10 at its pivot points 10B and 10D.

It can be seen in Fig. 7 how the end panels 1A and 1B are sandwiched between the intermediate panels 2A and 2B and end panel sliding supports 15A, 15B, respectively. Again, the end panels 1A, 1B are free to slide therebetween when the interior side panel arrangement 100 extends or contracts. Fig. 8 shows separately the combination of the five-pivot-point scissor mechanism 10 and end panel sliding supports 15A, 15B. The intermediate panel 2A, 2B and middle panel 3 are attached to the five-pivot-point scissor mechanism 10 by means of screws (again, the screws cannot be derived from the cross-sectional view shown in Fig. 7 but are illustrated in the plan rear view shown in Fig. 4).

Notably, the end panel sliding supports 15A, 15B of the five-pivot-point scissor mechanism 10 have a different structure than the end panel sliding supports 25A, 25B of the three-pivot-point scissor mechanism 10. That is, in some embodiments, the scissor arms 11 of the five-pivot-point scissor mechanisms 10 may have the same length as the scissor arms 21 of the three-pivot-point scissor mechanisms 20. In this case, the end panel sliding supports 15A, 15B and 25A, 25B can have the same structure. However, in the present and preferred embodiment as shown in the drawings, the scissor arms 21 of the three-pivot-point scissor mechanisms 20 are shorter than the scissor arms 11 of the five-pivot-point scissor mechanisms 10. The reason is that shorter scissor arms need less vertical space in their contracted position and, therefore, a scissor mechanism with relatively short scissor arms can be placed relatively close to the top or bottom of the interior side panel arrangement 100, which placement helps to prevent gaps from forming between the panels. The different lengths of the scissor arms require a specific structure of the end panel sliding supports 15A, 15B, on the one hand, and 25A, 25B, on the other hand, as will be explained in the following.

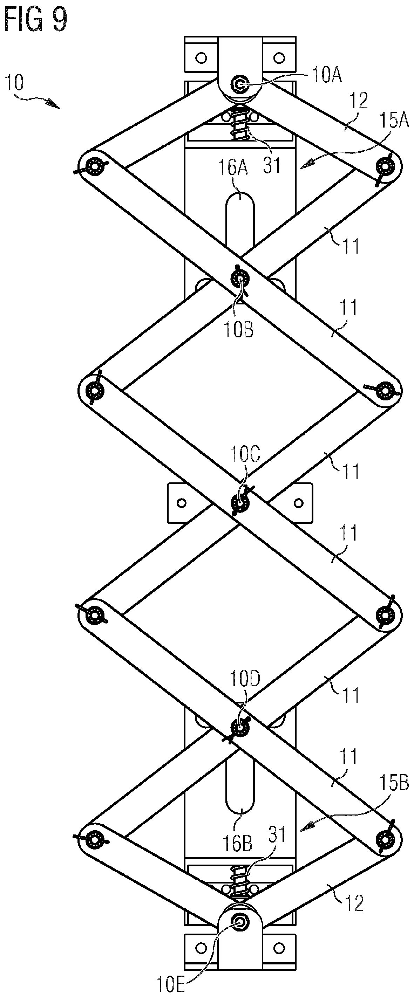

As mentioned above, the movement of the intermediate panels 2A, 2B follows the movement of the five-pivot-point scissor mechanisms 10 to which the intermediate panels 2A, 2B are attached. As a result of the different scissor arm lengths, the three-pivot-point scissor mechanisms 20 can follow the movement of the intermediate panels 2A, 2B only to a certain extent. Once the three-pivot-point scissor mechanisms 20 have reached their maximum extension (or, in a - not illustrated - kinematic reverse configuration, its maximum contraction), the intermediate panels 2A, 2B stop moving. Then, when the five-pivot-point scissor mechanisms 10 extend (or contract) further, only the end panels 1A, 1B can move further in the direction of extension (or direction of contraction) of the interior side panel arrangement 100. For this reason, the points of attachment of the five-pivot-point scissor mechanisms 10 to the intermediate panels 2A, 2B at their pivot points 10B and 10D, respectively, are not absolutely fixed, but they can shift in the direction of extension and contraction. In the specific embodiment shown in the drawings, in which these attachment points are provided in the area of the end panel sliding supports 15A, 15B, the arrangement is such that the end panel sliding supports 15A, 15B each have a slit 16A, 16B, which is best visible in Fig. 9. Retainers 17A, 17B, which are respectively attached to the five-pivot-point scissor mechanisms 10 at their pivot points 10B, 10D, are guided in the slits 16A, 16B so that the pivot points 10B and 10D are allowed to move along the slits 16A, 16B.

Now, taking a look at Fig. 4 again, which shows the interior side panel arrangement 100 in its contracted state when the interior side panel arrangement 100 and, thus, the five-pivot-point scissor mechanisms 10 are extended, the three-pivot-point scissor mechanisms 10 can follow only to a certain extent until they reach their maximum extension. From that point on, the intermediate panels 2A, 2B cannot move any further away from the middle panel 3. Any further extension of the interior side panel arrangement 100 and the five-pivot-point scissor mechanisms 10 requires that the pivot points 10B and 10D move relative to the intermediate panels 2A, 2B, namely by moving along the slits 16A, 16B which are provided, in the embodiment shown, in the end panel sliding supports 15A, 15B, until the maximum extension of the interior side panel arrangement 100 is reached.

According to a further aspect, in order to avoid that the intermediate panels 2A, 2B assume an undefined position, biasing elements 31 in the form of compression springs are arranged so as to urge the retainers 17A and 17B toward one end of the slits 16A and 16B, respectively, namely in the embodiment shown toward the middle panel 3. As a consequence, the pivot points 10B and 10D can move along the slits 16A and 16B only after the three-pivot-point scissor mechanisms 20 have reached their maximum extension. If the compression spring 31 was not provided, the pivot point 10B and/or the pivot point 10D could move along the slits 16A, 16B initially without causing any extension of also the three-pivot-point scissor mechanism 20 and, thus, without any movement of the intermediate panels 2A and 2B relative to the middle panel 3. Such relative movement would start only at the time when the pivot point 10B and/or pivot point 10D has reached the other end of the slits 16A, 16B.

Of course, a controlled sequence of movement of the panels relative to each other can likewise be realized by arranging the compression spring 31 on the other side of the retainers 17A and 17B, respectively, so as to urge the retainers 17A and 17B away from the middle panel 3. Namely, when the biasing element 31, be it a compression spring or a tension spring, is arranged so as to urge the retainers 17A/17B and, thus, the pivot points 10B and 10D in the opposite direction, namely away from the middle panel 3, then the five-pivot-point scissor mechanisms 10 are allowed to further contract when the three-pivot-point scissor mechanisms 20 have reached their maximum contraction. In the former arrangement, only the end panels 1A, 1B move when the interior side panel arrangement 100 is reaching its maximum extension, whereas in the latter arrangement only the end panels 1A and 1B move when the interior side panel arrangement 100 starts to extend from its maximum contracted state.

Of course, tension springs or other biasing elements may be used instead of the compression springs 31 of the specific embodiment shown in the drawings.

In particular, it is likewise possible to arrange the biasing elements 31 such that the retainers 17A, 17B assume a position somewhere in the middle of the slits 16A, 16B. As a result, when the five-pivot-point scissor mechanism 10 moves in an extension direction, further extension thereof is possible even when the three-pivot-point scissor mechanism 20 has reached its maximum extension, whereas when the five-pivot-point scissor mechanism 10 moves into the opposite direction, i.e. in the contraction direction, further contraction thereof is possible even when the three-pivot-point scissor mechanism 20 has reached its maximum contraction.

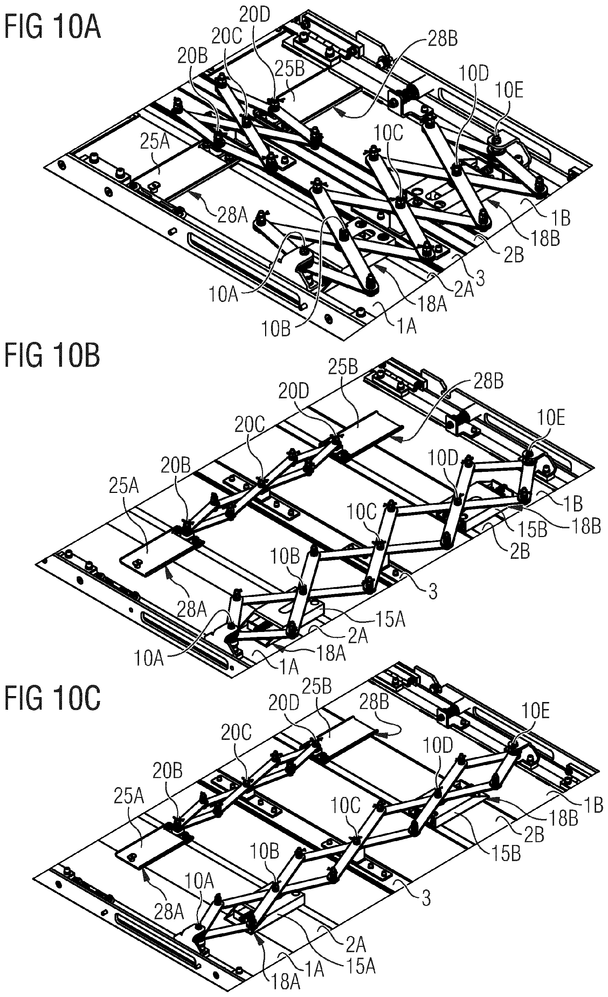

Figs. 10A to 10C show the relative position of the panels 1A, 1B, 2A, 2B, 3 in the areas of the five-pivot-point scissor arrangement 10 (Figs. 10A to 10C) and three-pivot-point scissor mechanism 20 in positions where the interior side panel arrangement 100 is maximally contracted (Fig. 10A) and maximally extended (Fig. 10C) as well as in an intermediate position where the three-pivot-point scissor mechanism 20 has reached its maximum extension and the five-pivot-point scissor mechanism 10 has not yet reached its maximum extension (Fig. 10B). It is indicated in Figs. 10A to 10C where the panels 1A, 2A, 3, 2B, 1B are fixedly attached to the five-pivot-point scissor mechanism 10 and three-pivot-point scissor mechanism 20, namely at the pivot points 10A to 10E and 20B to 20D, respectively, and further indicated where the end panels 1A and 1B are slidably supported by the end panel sliding supports 15A, 15B and 25A, 25B, respectively, namely at the support points 18A, 18B and 28A, 28B.

Instead of the five-pivot-point scissor mechanisms 10 providing five attachment points, a three-pivot-point scissor mechanism, as disclosed in CN 201205911 Y, can alternatively be used, as it likewise provides five attachment points for the five panels at corresponding positions. However, the five-pivot-point scissor mechanisms 10 are preferred, as they require less vertical space in their contracted position, thereby leaving more lateral space for the arrangement of the three-pivot-point scissor mechanisms 20.

Furthermore, instead of providing the slits 16A and 16B for the pivot points 10B and 10D in the end panel sliding supports 15A, 15B of the five-pivot-point scissor mechanisms 10, such slits may alternatively be provided in the end panel sliding supports 25A, 25B for the pivot points 20B and 20D of the three-pivot-point scissor mechanisms 20.

## Claims

1. An interior side panel arrangement (100) for a gangway between a first passenger car and a second passenger car of a multi-car vehicle, comprising:
- a first end panel (1A) configured to be arranged next to the first passenger car and a second end panel (1B) configured to be arranged next to the second passenger car,
- a middle panel (3) arranged between the first and second end panels (1A, 1B),
- a first intermediate panel (2A) arranged between and overlapping with one or both of the first end panel (1A) and middle panel (3), and a second intermediate panel (2B) arranged between and overlapping with one or both of the second end panel (1B) and middle panel (3),
- a plurality of pivot point scissor mechanisms (10, 20) which are arranged above each other in a vertically spaced relationship and which comprise:
(a) at least one first pivot point scissor mechanism (10), preferably two first pivot point scissor mechanisms (10), configured to be attached to the first passenger car or first end panel (1A) and to the second passenger car or second end panel (1B) so that, when the two passenger cars or the two end panels (1A, 1B) move away from or closer to each other, the at least one first pivot point scissor mechanism (10) expands or contracts, respectively, wherein the middle panel (3), first intermediate panel (2A) and second intermediate panel (2B) are attached to the at least one first pivot point scissor mechanism (10) so that the middle panel (3), first intermediate panel (2A) and second intermediate panel (2B) move relative to each other and relative to the first and second end panels (1A, 1B) when the at least one first pivot point scissor mechanism (10) expands or contracts, and
(b) at least one second pivot point scissor mechanism (20), preferably two second pivot point scissor mechanisms (20), which is/are neither attached to the first passenger car or first end panel (1A) nor to the second passenger car or second end panel (1B), wherein the middle panel (3), first intermediate panel (2A) and second intermediate panel (2B) are attached to the at least one second pivot point scissor mechanism (20) so that the at least one second pivot point scissor mechanism (20) expands or contracts, respectively, as the middle panel(3) and the first and second intermediate panels (2A, 2B) move relative to each other when the at least one first pivot point scissor mechanism (10) expands or contracts.

2. The interior side panel arrangement (1) according to claim 1, wherein the at least one first pivot point scissor mechanism (1) is a multi-pivot-point scissor mechanism having at least three pivot points (10A, 10C, 10E), preferably five pivot points (10A, 10B, 10C, 10D, 10E), and the at least one second pivot point scissor mechanism (20) is a three-pivot-point scissor mechanism having exactly three pivot points (20B, 20C, 20D),
wherein the middle panel (3), first intermediate panel (2A) and second intermediate panel (2B) are attached to the at least one second pivot point scissor mechanism (20) at respective ones of the three pivot points (20B, 20C, 20D),
wherein the at least one first pivot point scissor mechanism (10) is configured to be attached to the first passenger car or first end panel (1A) at a first one of its at least three pivot points (10A, 10C, 10E) and to the second passenger car or second end panel (1B) at a second one of its at least three pivot points (10A, 10C, 10E),
wherein the middle panel (3) is attached to the at least one first pivot point scissor mechanism (10) at a central one (10C) of the at least three pivot points (10A, 10C, 10E) so that the middle panel (3) moves relative to the first and second end panels (1A, 1B) when the at least one first pivot point scissor mechanism (10) expands or contracts, and
wherein the first and second intermediate panels (2A, 2B) are attached to the at least one first pivot point scissor mechanism (10) so that the first and second intermediate panels (2A, 2B) move relative to the middle panel (3) and relative to the first and second end panels (1A, 1B) when the at least one first pivot point scissor mechanism (10) expands or contracts.

3. The interior side panel arrangement (1) according to claim 1 or 2, wherein the first pivot point scissor mechanism (10) is a five-pivot-point scissor mechanism having five pivot points (10A, 10B, 10C, 10D, 10E), wherein the first and second intermediate panels (2A, 2B) are attached to the at least one first pivot point scissor mechanism (10) at respective ones (10B, 10D) of the five pivot points (10A, 10B, 10C, 10D, 10E).

4. The interior side panel arrangement (1) according to any one of claims 1 to 3, wherein the interior side panel arrangement (1) is a five-piece panel system in which the first intermediate panel (1A) overlaps with both the first end panel (1A) and middle panel (3) and the second intermediate panel (1B) overlaps with both the second end panel (1B) and middle panel (3).

5. An interior side panel arrangement (1) for a gangway between a first passenger car and a second passenger car of a multi-car vehicle, wherein the interior side panel arrangement (1) is a five-piece panel system, comprising:
- a first end panel (1A) configured to be arranged next to the first passenger car and a second end panel (1B) configured to be arranged next to the second passenger car,
- a middle panel (3) arranged between the first and second end panels (1A, 1B),
- a first intermediate panel (2A) arranged between and overlapping with both the first end panel (1A) and middle panel (3), and a second intermediate panel (1B) arranged between and overlapping with both the second end panel (1B) and middle panel (3),
- three or more pivot point scissor mechanisms (10, 20) which include (a) at least one first pivot point scissor mechanism (10) in the form of a five-pivot-point scissor mechanism having exactly five pivot points (10A, 10B, 10C, 10D, 10E) and (b) at least two second pivot point mechanisms (20) in the form of a three-pivot-point scissor mechanism having exactly three pivot points (20B, 20C, 20D), wherein the three or more pivot point scissor mechanisms (10, 20) are arranged above each other in a vertically spaced relationship,
wherein the at least one first pivot point scissor mechanism (10) is configured to be attached to the first passenger car or first end panel (1A) at a first one (10A) of its five pivot points (10A, 10B, 10C, 10D, 10E) and to the second passenger car or second end panel (1B) at a second one (10E) of its five pivot points (10A, 10B, 10C, 10D, 10E), so that, when the two passenger cars or the two end panels (1A, 1B) move away from or closer to each other, the at least one first pivot point scissor mechanism (10) expands or contracts, respectively,
wherein the middle panel (3) is attached to the at least one first pivot point scissor mechanism (10) at a central one (10C) of the five pivot points (10A, 10B, 10C, 10D, 10E) so that the middle panel (3) moves relative to the first and second end panels (1A, 1B) when the at least one first pivot point scissor mechanism (10) expands or contracts,
wherein the first and second intermediate panels (2A, 2B) are attached to the at least one first pivot point scissor mechanism (10) so that the first and second intermediate panels (2A, 2B) move relative to the middle panel (3) and relative to the first and second end panels (1A, 1B) when the at least one first pivot point scissor mechanism (10) expands or contracts, and
wherein the at least two second pivot point scissor mechanisms (20) are attached to the middle panel (3) and the first and second intermediate panels (2A, 2B) at respective ones of their three pivot points (20B, 20C, 20D) so that the at least two second pivot point scissor mechanisms (20) expand or contract, respectively, as the middle panel (3) and the first and second intermediate panels (2A, 2B) move relative to each other when the at least one first pivot point scissor mechanism (10) expands or contracts.

6. The interior side panel arrangement (1) according to any one of claims 1 to 5, wherein two of the second pivot point scissor mechanisms (2) are arranged vertically above and below, respectively, the at least one first pivot point scissor mechanism (10).

7. The interior side panel arrangement (1) according to any one of claims 1 to 6, comprising two of the at least one first pivot point scissor mechanisms (10).

8. The interior side panel arrangement (1) according to any one of claims 1 to 7, wherein the second pivot point scissor mechanism (20) has shorter scissor arms (21, 22) than the at least one first pivot point scissor mechanism (10), and wherein at least one of (a) the at least one first pivot point scissor mechanism (10) and (b) the second pivot point scissor mechanism (20) is slidably connected to the first and second intermediate panels (2A, 2B) so as to allow:
- further expansion of the at least one first pivot point scissor mechanism (10) when the second pivot point scissor mechanism (20) has reached its maximum expansion, or
- further contraction of the at least one first pivot point scissor mechanism (10) when the second pivot point scissor mechanism (20) has reached its maximum contraction, or
- further expansion of the at least one first pivot point scissor mechanism (10) when the second pivot point scissor mechanism (20) has reached its maximum expansion and further contraction of the at least one first pivot point scissor mechanism (10) when the second pivot point scissor mechanism (20) has reached its maximum contraction.

9. The interior side panel arrangement (1) according to claim 8, wherein the slidable connection of the at least one first pivot point scissor mechanism (10) or second pivot point scissor mechanism (20) to the first and second intermediate panels (2A, 2B) includes biasing elements (31) which urge the first intermediate panel (2A) toward or away from, or partially toward and partially away from, the first end panel (1A) and the second intermediate panel (2B) toward or away from, or partially toward and partially away from, the second end panel (1B).

10. The interior side panel arrangement (1) according to any one of claims 1 to 9, wherein at least one of: (a) at least one first end panel sliding support (15A) is attached to the first intermediate panel (2A), wherein the first end panel (1A) is slidably sandwiched between the first intermediate panel (2A) and the at least one first end panel sliding support (15A), or (b) at least one second end panel sliding support (25B) is attached to the second intermediate panel (2B), wherein the second end panel (1B) is slidably sandwiched between the second intermediate panel (2B) and the at least one second end panel sliding support (25B), or (c) at least one first end panel sliding support (15A) is attached to the first end panel (1A), wherein the first intermediate panel (2A) is slidably sandwiched between the first end panel (1A) and the at least one first end panel sliding support (15A), or (d) at least one second end panel sliding support (25B) is attached to the second end panel (1B), wherein the second intermediate panel (2B) is slidably sandwiched between the second end panel (1B) and the at least one second end panel sliding support (25B).

11. The interior side panel arrangement (1) according to claim 10, wherein the connection of the second pivot point scissor mechanism (20) to the first and second intermediate panels (2A, 2B) is in areas of the at least one first end panel sliding support (15A) and second end panel sliding support (25B).

12. The interior side panel arrangement according to claim 10 or 11, wherein the connection of the first pivot point scissor mechanism (10) to the first and second intermediate panels (2A, 2B) is in areas of the at least one first end panel sliding support (15A) and second end panel sliding support (25B).

13. The interior side panel arrangement (1) according to claims 4 to 12, wherein the middle panel (3) forms an innermost panel of the five-piece panel system so as to face toward an interior of the gangway, the first and second end panels (1A, 1B) form outermost panels of the five-piece panel system so as to face away from the interior of the gangway, the first intermediate panel (2A) is sandwiched between the middle panel (3) and the first end panel (1A), and the second intermediate panel (2B) is sandwiched between the middle panel (3) and the second end panel (1B).

14. A gangway configured to be mounted between a first passenger car and a second passenger car of a multi-car vehicle, the gangway comprising, on each lateral side of the gangway, an interior side panel arrangement (1) according to any one of claims 1 to 13.

15. A multi-car vehicle comprising a first passenger car and a second passenger car and further comprising a gangway according to claim 14 mounted between the first passenger car and the second passenger car.
